# EUROPEAN PATENT SPECIFICATION

(11) **EP 1 059 708 B1**
(45) Date of publication and mention of the grant of the patent: **25.01.2006**
(21) Application number: 99971974.3
(22) Date of filing: 10.11.1999
(51) Int. Cl.: G01N 21/03, G01N 21/63, G21K 1/00

(54) **APPARATUS FOR PHOTOREACTION**
GERÄT FÜR PHOTOREAKTION
APPAREIL POUR PHOTOREACTION

(30) Priority: 10.11.1998 JP 31905998; 26.02.1999 JP 4984799
(43) Date of publication of application: 13.12.2000
(73) Proprietor: Kabushiki Kaisha IDX Technologies, Tokyo (JP); Suzuki, Yasuo, Naka-gun, Ibaraki 319-1106 (JP)
(72) Inventor: SUZUKI, Yasuo, Naka-gun, Ibaraki 319-1106 (JP); IKEHATA, Takashi, Hitachi-shi, Ibaraki 316-0036 (JP)
(74) Representative: Ertl, Nicholas Justin
(86) International application number: PCT/JP1999/006262
(87) International publication number: WO 2000/028631

(56) References cited:
- WO-A-97/08792
- JP-A- 1 102 985
- JP-A- 2 049 483
- JP-A- 5 110 166
- JP-A- 5 251 798
- JP-A- 6 090 066
- JP-A- 6 244 481
- JP-A- 7 249 499
- JP-A- 61 097 020
- JP-A- 61 097 021
- JP-U- 4 137 079
- TRUTNA W R ET AL: "Multiple-pass Raman gain cell" APPLIED OPTICS USA, vol. 19, no. 2, 15 January 1980 (1980-01-15), pages 301-312, XP002321045 ISSN: 0003-6935
- IKEHATA T ET AL: "A novel laser technique for constructing a plasma micro-undulator and a compact X-ray source" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, vol. 383, no. 2, 11 December 1996 (1996-12-11), pages 605-609, XP004016227 ISSN: 0168-9002

## Description

The present invention relates to a device on which a laser beam is reflected multiple times by a plurality of confronting concave mirrors as defined in claim 1, the reflected optical path is centralized to form an interactive region of high photon density, and an interaction target such as gas, liquid, a solid body, plasma, a particle beam or an electron beam is introduced into the interactive region to cause an optical interaction such as optical excitation, optical ionization, photolysis, optical dissociation, photosynthesis, optical generation and optical analysis.

Gas, liquid, solid bodies and particle beams perform strong optical interactions with laser beams of specified wavelengths corresponding to the atoms and molecules composing them. In order to cause such interactions in the conventional arts, a pair of confronting curvilinear mirrors are generally used for forming an optical resonator in which optical interactions are carried out.

In this case, a region of high photon density is centralized to the center of the resonator interior. Such a region is extremely too small and too short to reserve long interaction time of atoms and molecules passing through the region. In order to reserve sufficient possibility to store light, an aperture formed through each curvilinear mirror is designed as small as possible to reduce optical loss. As a result, introduction of beams, atoms and molecules into the interactive region is rendered to be highly difficult to practice sufficiently. It is additionally a recent trend to use laser beams of extremely short pulses. Use of such laser beams makes the interactive region extremely small in terms of time and space dimension and, consequently, it is almost infeasible to cause optical interactions effectively.

Use of gas flows and particle beams for optical interaction necessitates presence of large apertures for incidence and exit into and out of the interactive region. In addition, these interaction media are in most cases rather low in density and degree of interaction. In order to cause sufficient optical interactions of the gas flows and particle beams with the laser beam, it is necessary to reserve a large interaction region in terms of time and space dimension.

According to a first aspect of the present invention, there is provided an optical interaction device comprising first and second mirror sets (A, B) disposed in a confronting arrangement to each other so as to form an interactive region with centralized laser beams, each including a plurality of concave mirrors (Aₙ, Bₙ) disposed in annular arrangements around a common axis, means for generating a laser beam for repeated reflections between said mirror sets (A, B), laser beam guide means for introducing said laser beam into said interactive region and for outputting therefrom after prescribed reciprocal reflections between said first and second mirror sets (A,B) means for introducing an interaction target into said interactive region, wherein each concave mirror in said first mirror set (A) is disposed in an arrangement such that an incident laser beam is reflected towards a corresponding concave mirror in said second mirror set after passage through a prescribed position on said common axis, thereby forming said interactive region of a high photon density with centralization of reflected beams at said prescribed position on said common axis, and wherein each concave mirror in said second mirror set (B) is disposed in an arrangement such that an incident beam from a concave mirror in said first mirror set is reflected towards a concave mirror adjacent to said concave mirror in said first mirror set, thereby sequentially shifting reflected beams in a circumferential direction of said mirror sets.

The present invention seeks to provide an optical interaction device which removes the above-described problems inherent to the conventional arts and assures high efficiency in use of laser beams.

The present invention also seeks to provide an optical interaction device which is able to reserve large apertures for incidence and exit of interaction media and interaction targets, a large interactive region with high photon density and along interaction time.

According to the present invention, an optical interaction device includes a pair of confronting first and second mirror sets each of which is made up of a plurality concave mirrors disposed in a annular arrangement around a common axis of the interactive region.

A laser beam generated by laser beam generating means is led to one concave mirror selected from the first mirror set via a laser beam guide means. Each concave mirror in the first mirror set reflects an incident beam to pass it through a prescribed position on an axis of the interactive region to direct a reflected beam to a corresponding concave mirror in the second mirror set. As a result, an interactive region of high photon density is formed at a position where reflected beams are centralized.

Each concave mirror in the second mirror set reflects incident beam from a corresponding concave mirror in the first mirror set to direct it to an adjacent concave mirror. As a consequence, each laser beam reciprocates between the first and second mirror sets whilst sequentially moving in the circumferential direction of the first and second mirror sets. Interaction between the laser beams and the interaction target takes places in an interaction region where the laser beams pass collectively.

In the optical interaction device of the present invention, incident laser beams to the concave mirrors of the first, mirror set are reflected in a collected fashion and centralized at a focus on an axis of the interactive region. Then, each reflected beam can be directed to a corresponding concave mirror of the second mirror set. Thus, a interaction region of high photon density can be formed at a position where the reflected beams are centralized.

Examples of the present invention will now be described in detail with reference to the accompanying drawings, in which:
Figure 1 shows the diagrammatic view of the optical interaction device in accordance with the present invention, in which ( a ) is a side plan view, and, ( b ) and ( c ) are front plan view of respective mirror sets,
Figure 2 indicates laser beam optical paths of laser beams reciprocating the mirrors sets, in which ( a ) shows the going optical path and ( b ) shows the return optical path,
Figure 3 shows the optical interaction of as with laser beams on the optical interaction device in accordance with the present invention,
Figure 4 shows a process for producing a laser beam with wavelength conversion by the optical interaction device in accordance with the present invention,
Figure 5 shows a charge converter incorporating the optical interaction device in accordance with the present invention,
Figure 6 shows a multi charged ion source incorporating the optical interaction device in accordance with the present invention,
Figure 7 shows a micro analyzer incorporating the optical interaction device in accordance with the present invention,
Figure 8 shows a micro analyzer incorporating the optical interaction device in accordance with the present invention,
Figure 9 shows a micro dissociation device incorporating the optical interaction device in accordance with the present invention, and
Figure 10 shows dual phase excitation process performed on the optical interaction device in accordance with the present invention.

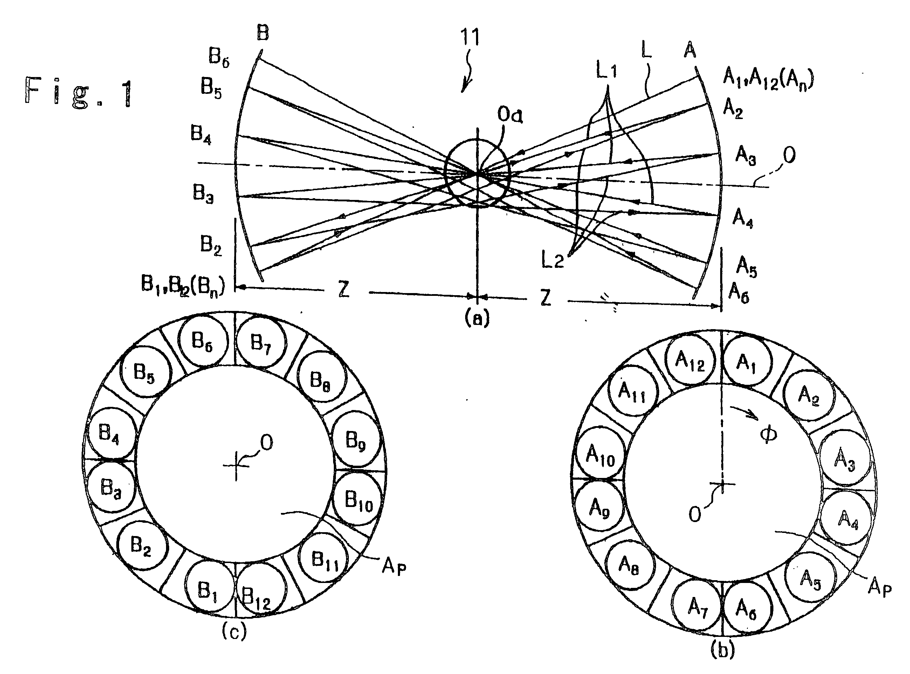

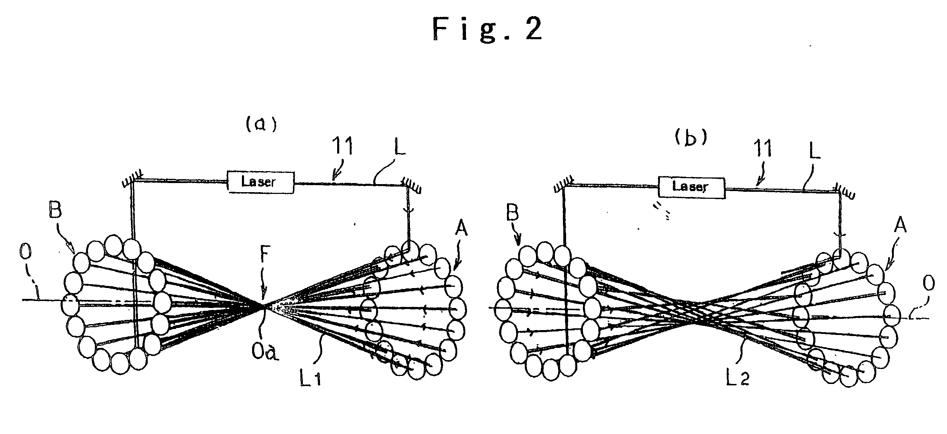

Figure 1 shows a diagrammatic view of the optical interaction device in accordance with the present invention. In Figure 1, ( a ) is a side plan view and ( b ) as well as ( c ) are front plan view of the respective mirror sets. The optical paths of laser beams reciprocating between the mirror sets A and B are shown in Figure 2.

The optical interaction device 11 includes a pair of mirror sets A and B disposed in a confronting arrangement. The mirror set A includes multiple concave mirrors A1, A2 to An which are disposed annularly around an axis of the interactive region O of beams. Similarly, the mirror set B includes multiple concave mirrors B1, B2 to Bn which are disposed annularly around an axis of the interactive region O of beams.

In the case of the illustrated embodiment, each mirror set A or B includes twelve concave mirrors ( n=12 ). An aperture Ap is formed on the inner side of each annular arrangement of the concave mirrors for introduction of electron beams. Although the mirrors of the mirror sets A and B appear to be disposed on curved planes in the illustration in order to show that the concave mirrors have a same focal length, the concave mirrors are disposed on flat planes in practice.

Each concave mirror An of the mirror set A reflects an incident laser beam to focus the same at a prescribed position on the axis of the interactive region O and the reflected laser beam is directed to a corresponding concave mirror Bn of the mirror set B. Here, the optical path L1 of the laser beam traveling from the concave mirror An to the concave mirror Bn whilst passing the focus is hereinafter referred to as " a forward trajectory ".

Each concave mirror Bn of the mirror set B reflects an incident laser beam from a corresponding concave mirror An of the mirror set A to direct the same to an adjacent concave mirror An+1, the adjacent concave mirror being biased from the concave mirror in the direction of Φ. Here, the optical path L2 of the laser beam traveling from the concave mirror Bn to the concave mirror Bn+1 is hereinafter referred to as " a return trajectory ".

Therefore, the laser beams introduced to the mirror sets A and B sequentially shift their reflected beams in the circumferential direction Φ of the annular arrangement of the concave mirrors. Stated otherwise, the beams travel from A1 to B1, from B1 to A2, from A2 to B2 - - - from An to Bn and from Bn to An+1, respectively. In Figure 1, only the optical paths of reciprocating laser beams from A1 to A6 are shown for simplification purposes.

The inter-mirror distance of the forward trajectory L1 from a concave mirror An to a corresponding concave mirror is set to 2Z and the radius of curvature of the concave mirror are set to 2Z. When a laser beam is incident in a parallel mode to the concave mirror A1 from the position of the concave mirror B1 via, for example, a telescope in the arrangement shown in Figure 1, the laser beam reflected from the concave mirror A1 focuses at a point Oa on the axis of the interactive region and, thereafter reaches at the concave mirror B1 in a diverged mode. Since the concave mirrors A1 and B1 have a same focal length, the laser beam L2 reflected by the concave mirror B1 travels to the concave mirror A2 in a parallel mode. The laser beam reflected by the concave mirror A2 focuses at the point Oa. This process is sequentially repeated. In this process, the laser beams L1 in the forward trajectory all focus at the point Oa and the laser beams L2 in the return trajectory all travel in a parallel mode.

When a laser beam is incident to the concave mirror A1 in a converged mode, the reflected laser beam travels in a parallel mode. So, all laser beams L1 reflected by the concave mirrors A travel, after passing the point Oa on the axis of the interactive region, in a parallel mode towards the concave mirrors B. Upon reflection by the concave mirrors B, the laser beams travel in a converged mode towards the concave mirrors A. Sequential reflections are repeated all in this mode. During this process, the laser beams in a parallel mode are all centralized at the point Oa to form an interaction region of a high photon density around the point Oa. The reflected laser beams L2 in the return trajectory are also collected within an narrow region around the point Oa. So, the laser beams L2 in the return trajectory may also be utilized for the optical interaction.

When a laser beam is incident from the position of B12, where no concave mirror is provided, the laser beam exits from the position of B12 after travel between the mirror sets A and B. Consequently, it is possible to introduce a laser beam into the system by an outside optical circuit including an optical switch to rotate the polarization plane over 90 degrees, reflect it several times for repeated incidences, thereby storing laser beams in the region between the mirror sets A and B. Laser beams can be introduced into the system constantly when wavelength is change by a secondary harmonics generator. The manner and incident and exit positions of laser beams are not limited to the above-described designs.

When a beam is incident to a concave mirror with inclination to its optical axis, the resultant image is distorted due to aberration. Distortion can, however, be offset at every 180 degree of rotation by reflecting the beam whilst rotating the concave mirror in the direction of Φ. As a result, reflection can be repeated over a long distance. The number of reciprocation of a laser beam between the mirror sets A and B dependent upon the reflection loss of the mirrors involved in the process. Even taking into consideration the fact that the photon density lowers to 0.999 times after the first reflection and to 0.999² times after the second reflection, a 1000 times of photon density can be obtained as a whole at the point where the beams cross. This is because 1 divided by ( 1 - 0.999 ) is equal to 1000.

Therefore, when an interaction target such as gas, liquid, a solid body, plasma, particle beams and electron beams are introduce along the axis into the region between the mirror sets A and B, laser beams and the interaction target perform a desired interaction within the interactive region near the point Oa where the laser beams focus.

Laser beam pulses shored at the above-described optical interaction device are classified into the following three types:
( 1 ) Storage of a single short pulse. Only one high output pulse shorter than the inter-mirror distance is introduced into the system so that a pulse train should repeatedly interact with electron beams. The period of pulse is as long as the time for travel between mirrors;
( 2 ) Storage of multiple short pulses. A plurality of pulses, each of which has a period of pulse as long as the time for travel between mirrors, are introduced into the system for storage within a region between mirror sets; and,
( 3 ) Storage of a long pulse. A pulse longer than the inter-mirror distance is used so that a laser beam should always be present between mirror sets.

When laser beams are introduced into the system in either of the three modes, the laser beams are collected at the center of the region between the mirror sets, where optical paths cross, to enhance photon density.

When particle beams of a velocity V are introduced into the interactive region F, the optical energy density is increased to γ( 1 - β.cos θ ) times due to Einsteinian Lorentz transformation whereas the wavelength is reduced to 1/γ( 1 - β.cos θ ) times due to Doppler effect. Here, β is equal to V/C, γ is equal to ( 1 -β² ) ^{-1 / 2}, and θ is the cross angle between a flux of laser beams and particle beams. Through tactful choice of the particle beam velocity and the cross angle, effective laser output can be enhanced and expedient selection and adjustment of laser beam wavelength can be achieved.

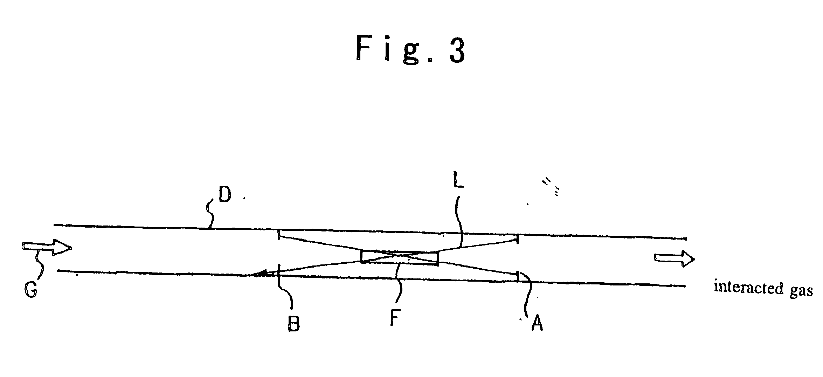

As shown in Figure 3, gas G is passed for optical interaction of gaseous atoms or molecules, as an interaction target, through the interactive region F in the optical interaction device in accordance with the present invention to cause optical interactions such as optical excitation with laser beams L.

For example, laser beams of a proper wavelength are selected and an interactive region F is formed in a duct and gas G such as dioxin gas or NoX gas is introduced into the interactive region F to cause efficient optical dissociation of the interaction target. When oxygen gas G is introduced, ozone can be synthesized optically. Namely, through optical interaction of gaseous atoms or molecules with laser beams within the interactive region, optical photolysis, optical synthesis, optical analysis and other optical treatments can be performed.

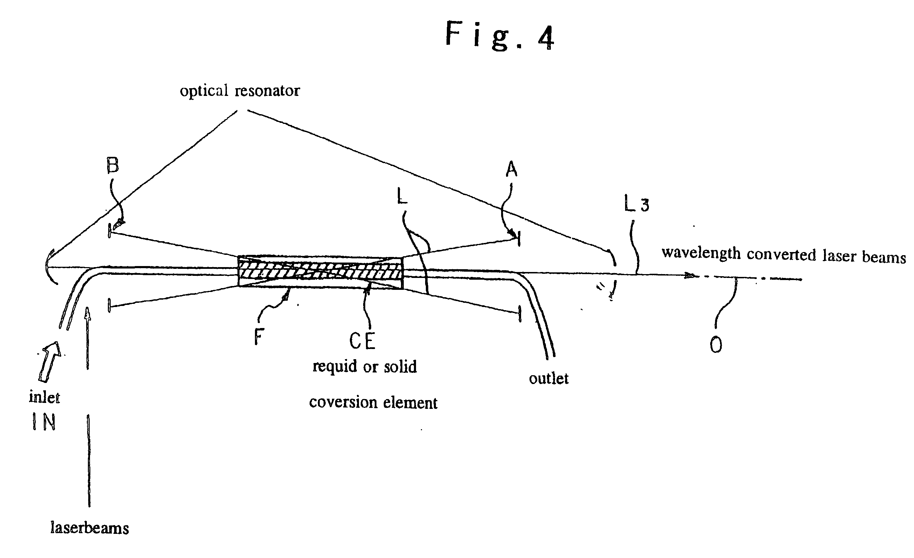

As shown in Figure 4, a liquid or solid conversion element CE is placed as an interaction target in an interactive region F for generation of laser beams with wavelength conversion. Optical excitation is caused by use of proper laser beams and laser beams of a specified wavelength are oscillated by an optical resonator RE arranged on the axis O of the interactive region. The liquid or solid conversion element CE is introduced through an inlet IN and placed in the interactive region F for excitation by laser beams L, thereby generating laser beams with wavelength conversion. An wavelength converted laser beam L3 is stored at an optical resonator RE for intended use.

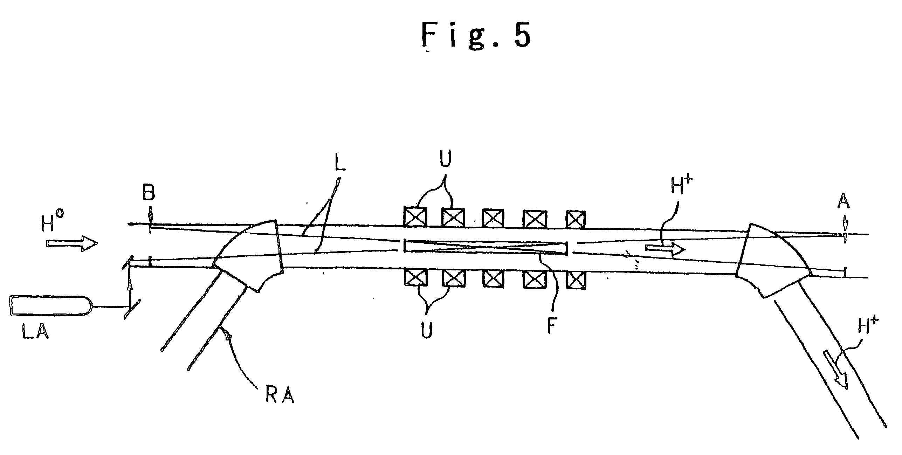

As shown in Figure 5, laser beams L generated by a laser beam generator LA are introduced into a space between mirror sets A and B to form an interactive region F for charge conversion of particle beams. When a high energy hydrogen beam H⁰ is introduced as an interaction target into the interactive region F, the beam is excited efficiently through optical interaction with the laser beams L.

An excited hydrogen beam is ionized within a magnetic field generated by charge converting magnets U which are arranged embracing the interactive region F for charge conversion. Ionized hydrogen ion H⁺ is subjected for reciprocation between the mirror sets A and B via a ring accelerator RA. In this case, the interactive region F is utilized for charge conversion of the ring accelerator RA.

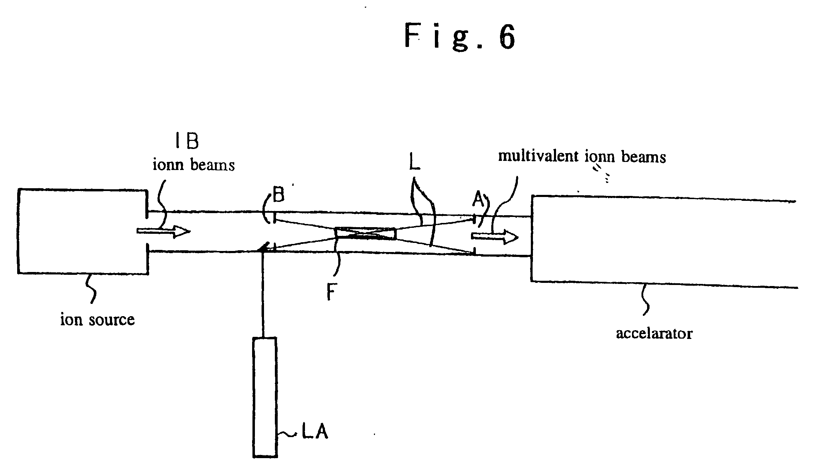

As shown in Figure 6, an ion beam IB from an ion source is introduced into an interactive region F for use as a multivalent ion source. Lots of electrons are stripped off the ion beam through optical ionization to form multivalent ion with high charge. More specifically, laser beams L generated at a laser generator LA are introduced into a space between mirror sets A and B to form an interactive region F. An ion beam IB from the ion source is introduced into the interactive region F in which the ion beam is excited to increase charge and generate a multivalent ion beam.

The multivalent ion beam is accelerated at an accelerator. In an example, a monovalent oxygen ion beam from the ion source is introduced into the interactive region F to generate a octavalent ion beam which is accelerated at the accelerator to an energy of eight times higher.

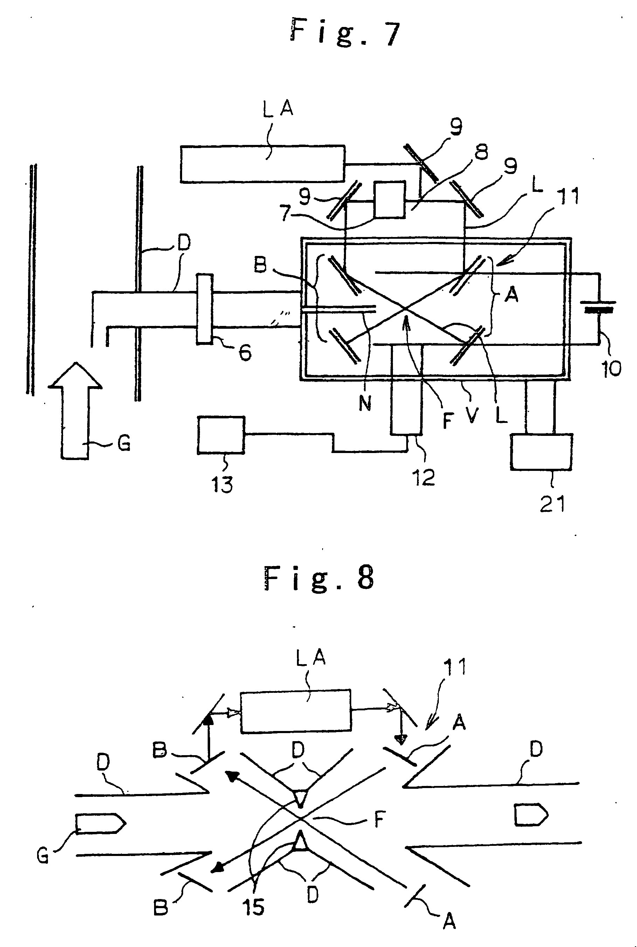

When the optical interaction device in accordance with the present invention is used for micro analyzer, a vacuum change V is provided in connection with a duct D for flow of exhaust gas G as shown in Figure 7. The vacuum chamber V is associated with a vacuum pump 21 for evacuation thereof. The duct D is provided with a compressor 6 for provisional compression of the exhaust gas G. The exhaust gas G is passed to a nozzle N via a shutter valve of the compressor 6 for ejection into the vacuum chamber V. This ejection causes inflation and cooling of the exhaust gas G. The nozzle N is disposed with its mouth being directed to the interactive region F.

The optical interaction device 11 performs resonance ionization of micro-components such as dioxin within the exhaust gas G. Laser beams L are supplied into the optical interaction device 11 from a given source outside the vacuum chamber V. A laser beam generator LA, an optical switch 7, a polariscope 8 and reflection mirrors 9 are disposed outside the vacuum chamber V for selection of laser beams of a specified wavelength in accordance with the kind of the micro-component such as dioxin and for supply into the optical interaction device 11.

Laser beams of a specified wavelength is capable of ionizing a specified substance through resonance. For example, a long pulse system is applied to ionization of dioxin. When high output laser beams of about two nano-meter wavelength are used, only electrons can be stripped off the dioxin for ionization without causing any decomposition of dioxin molecules.

The vacuum chamber V is provided with a collection guide 10 for electric absorption of ions. The collection guide 10 captures ionized dioxin by its electric charge. The dioxin so captured by the collection guide 10 is passed to an analyzer 12 of travel time and mass. The resultant mass spectrum is visually indicated on a monitor 13. Quantitative and qualitative analysis of dioxin can be carried out on the basis of the resultant mass spectrum.

As shown in Figure 8, the optical interaction device in accordance with the present invention, when used for removal of harmful micro-components, is disposed in a duct for exhaust gas G and a throttle 15 is disposed therein in order to ionize dioxin by a short pulse process. In this case, no compression of the exhaust gas is employed since only decomposition and harmlessness of the dioxin are intended without any need for high degree sensitivity. Therefore, interaction is carried out under atmospheric conditions.

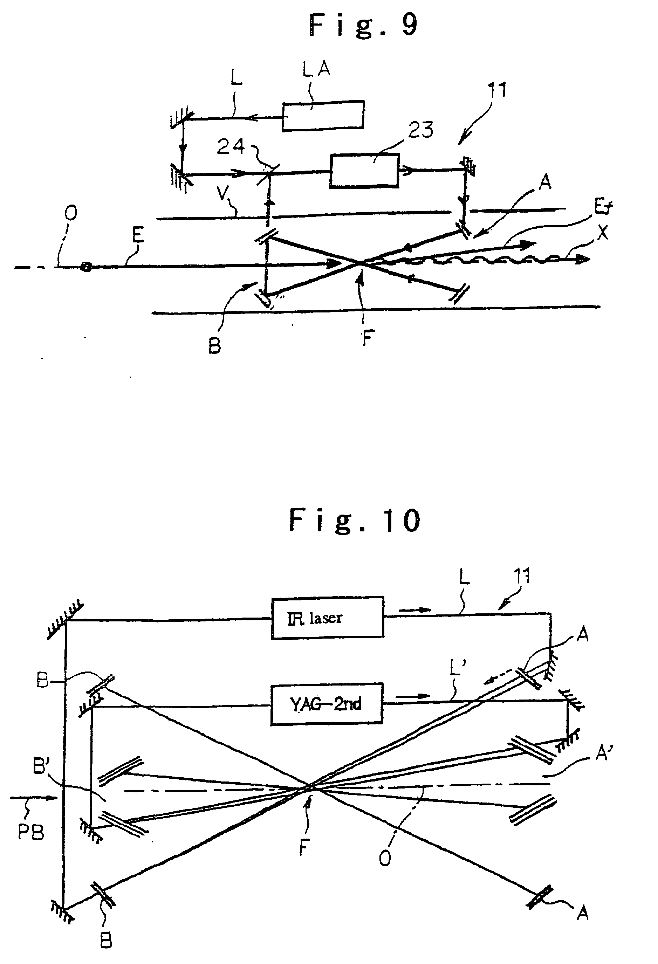

In the arrangement shown in Figure 9, the optical interaction device in accordance with the present invention is used for generation of an X-ray beam. In the illustration, 11 indicates the optical interaction device, LA indicates a laser beam generator, 23 indicates a SHG (secondary harmonics generator), 24 indicates a dichroic mirror and A and B indicate mirror sets which are disposed within a vacuum chamber V.

A laser beam L of a selected wavelength is introduced into the optical interaction device 11 and an interactive region F of a high photon density is formed by centralization of the laser beam L. An electron beam e is introduced into the interactive region f in the vacuum chamber V along the axis O of the interactive region for interaction with the laser beam 1.

It is understood that the laser beam made up of optical particles crashes against the electron beam to generate an X-ray beam through dispersion of photon beam. When a laser beam, i.e. a sufficiently powerful electro-magnetic wave, is used as an undulator which periodically applies electromagnetic power, X ray emission is resulted. In the illustration, X indicates an X ray generated by inverse Compton scattering or interaction with the undulator and Ef indicates scattered electron.

As shown in Figure 10, the interaction device 11 is arranged for two step excitation it includes two pairs of mirror sets A, B.A' and B' which arranged side by side so as to have a common interactive region F. Laser beams L and L' of different wavelength are introduced into the system. For example, IR laser beam and YAG-2nd laser beam are used. When A particle beam PB is introduced as an interactive target, the first step optical interaction is performed by the YAG-2nd laser beam and the second step optical interaction is performed by the IR laser beam.

The present invention can be employed in industrial fields in which optical interactions such as optical excitation, optical ionization, optical photolysis, optical dissociation, photosynthesis, optical generation and optical analysis are performed through interaction of laser beams of a specified wavelength with gaseous atoms and molecules, liquids and solid bodies.

## Claims

1. An optical interaction device (11) comprising first and second mirror sets (A, B) disposed in a confronting arrangement to each other so as to form an interactive region (10) with intersecting laser beams, each including a plurality of concave mirrors (An, Bn) disposed in annular arrangements around a common axis, means for generating a laser beam for repeated reflections between said mirror sets (A, B), laser beam guide means for introducing said laser beam into said interactive region and for outputting therefrom after prescribed reciprocal reflections between said first and second mirror sets (A,B) means for introducing an interaction target into said interactive region, wherein each concave mirror in said first mirror set (A) is disposed in an arrangement such that an incident laser beam is reflected towards a corresponding concave mirror in said second mirror set after passage through a prescribed position on said common axis, thereby forming said interactive region of a high photon density with intersection of reflected beams at said prescribed position on said common axis, and wherein each concave mirror in said second mirror set (B) is disposed in an arrangement such that an incident beam from a concave mirror in said first mirror set is reflected towards a concave mirror adjacent to said concave mirror in said first mirror set, thereby sequentially shifting reflected beams in a circumferential direction of said mirror sets.

2. An optical interaction device (11) as claimed in claim 1, wherein each concave mirror in said first mirror set (A) is disposed in an arrangement such that a incident laser beam is reflected so as to focus on said prescribe position on said common axis and to direct the same towards a corresponding concave mirror in said second mirror set, thereby forming an interactive region of a high photon density with collection of focuses on said prescribed position on said common axis.

3. An optical interaction device (11) as claimed in claim 1 or 2, wherein a laser beam is reflected in a parallel mode by a concave mirror in said first mirror set (A) and a laser beam is reflected in a converged mode by a concave mirror in said second mirror set (B) so as to focus on its path of travel.

4. An optical interaction device (11) as claimed in claim 1, 2 or 3, wherein at least two laser beam storing means including said first mirror set, said second mirror set, said laser beam generating means and said laser beam guide means are arranged to have said interactive region at a common position, laser beams of different wavelengths being introduced into said laser beam storing means, thereby collecting a plurality of laser beams of different wavelengths at said interactive region.

5. An optical interaction device (11) as claimed in any preceding claim, wherein said interaction target to be introduced into said interactive region is a particle beam, interaction with said laser beam increasing substantial output of said laser beam or performing selection of the wavelength of said laser beam.

6. An optical interaction device (11) as claimed in any of claims 1 to 4, wherein said interaction target to be introduced into said interactive region is a wavelength converting element, interaction with said laser beam performing wavelength conversion of said laser beam.

7. An optical interaction device (11) as claimed in any of claims 1 to 4, wherein said interaction target to be introduced into said interactive region is a particle beam, a charge converting magnet (U) being disposed surrounding said interactive region to generate a magnetic field in said interactive region, wherein said particle beam is excited in said interactive region and wherein is ionized in said magnetic field.

8. An optical interaction device (11) as claimed in claim 7, wherein said interactive region is disposed within a ring of a ring accelerator (RA) a particle excited in said interactive region and ionized in said magnetic field being accelerated by said ring accelerator.

9. An optical interaction device (11) as claimed in any of claims 1 to 4, wherein said interaction target to be introduced into said interactive region is an ion beam, interaction with said laser beam generating a multivalent ion.

10. An optical interaction device (11) as claimed in any of claims 1 to 4, wherein said interaction target to be introduced into said interactive region is an electron beam, interaction with said laser beam generates an X-ray beam.

11. An optical interaction device (11) as claimed in any of claims 1 to 4, wherein said interaction target to be introduced into said interactive region is gas, interaction with said laser beam causing photolysis.

12. An optical interaction device (11) as claimed in any preceding claim, wherein said interactive region is formed within a vacuum chamber, (V) a duct (D) for introducing compressed gas into said vacuum chamber (V) having a mouth directed toward said interactive region.

13. An optical interaction device (11) as claimed in any of claims 1 to 4, wherein said interaction target to be introduced into said interactive region is gas, said interactive region being formed within a vacuum chamber (V), a duct (D) being disposed within said vacuum chamber (V) having a mouth directed towards said interactive region, wherein compressed gas is introduced into said interactive region via said duct, an ion collector guide being disposed in said vacuum chamber so as to collect ionized molecules of said gas, said ion collector guide being electrically connected to a travel time mass analyzer for analysis of said molecules.

## Patentansprüche

1. Vorrichtung (11) für optische Wechselwirkungen umfassend erste und zweite Spiegelsätze (A, B), die in konfrontierender Anordnung zueinander angeordnet sind, so dass sie einen interaktiven Bereich (10) mit sich schneidenden Laserstrahlen bilden, wobei jeder eine Mehrzahl von konkaven Spiegeln (An, Bn) enthält, die in ringförmigen Anordnungen um eine gemeinsame Achse angeordnet sind, Mittel zum Erzeugen eines Laserstrahls für wiederholte Reflexionen zwischen den Spiegelsätzen (A, B), Laserstrahlführungsmittel zum Einführen des Laserstrahls in den interaktiven Bereich und zur Ausgabe nach vorgeschriebenen reziproken Reflexionen zwischen den ersten und zweiten Spiegelsätzen (A, B), Mittel zum Einführen eines Interaktionsziels in den interaktiven Bereich, worin jeder konkave Spiegel im ersten Spiegelsatz (A) in einer solchen Anordnung angeordnet ist, dass ein einfallender Laserstrahl zu einem entsprechenden konkaven Spiegel im zweiten Spiegelsatz reflektiert wird, nachdem er eine vorgeschriebene Position auf der gemeinsamen Achse durchlaufen hat, wodurch der interaktive Bereich mit einer hohen Photondichte mit Schnitt reflektierter Strahlen an der vorgeschriebenen Position auf der gemeinsamen Achse gebildet wird, und worin jeder konkave Spiegel im zweiten Spiegelsatz (B) in einer solchen Anordnung angeordnet ist, dass ein einfallender Strahl von einem konkaven Spiegel im ersten Spiegelsatz zu einem konkaven Spiegel neben dem konkaven Spiegel im ersten Spiegelsatz reflektiert wird, wodurch reflektierte Strahlen sequentiell in einer Umfangsrichtung der Spiegelsätze verschoben werden.

2. Vorrichtung (11) für optische Wechselwirkungen nach Anspruch 1, worin jeder konkave Spiegel im ersten Spiegelsatz (A) in einer solchen Anordnung angeordnet ist, dass ein einfallender Laserstrahl so reflektiert wird, dass er auf der vorgeschriebenen Position auf der gemeinsamen Achse fokussiert und dieser zu einem entsprechenden konkaven Spiegel im zweiten Spiegelsatz gerichtet wird, wodurch ein interaktiver Bereich mit einer hohen Photondichte mit Ansammlung von Brennpunkten auf der vorgeschriebenen Position auf der gemeinsamen Achse gebildet wird.

3. Vorrichtung (11) für optische Wechselwirkungen nach Anspruch 1 oder 2, worin ein Laserstrahl von einem konkaven Spiegel des ersten Spiegelsatzes (A) parallel reflektiert wird und ein Laserstrahl von einem konkaven Spiegel des zweiten Spiegelsatzes (B) konvergiert reflektiert wird, so dass er auf seinen Ausbreitungsweg fokussiert wird.

4. Vorrichtung (11) für optische Wechselwirkungen nach einem der Ansprüche 1, 2 oder 3, worin mindestens zwei Laserstrahlspeichermittel mit dem ersten Spiegelsatz, dem zweiten Siegelsatz, den Laserstrahlerzeugungsmitteln und den Laserstrahlführungsmitteln so angeordnet sind, dass der interaktive Bereich in einer gemeinsamen Position ist, wobei Laserstrahlen unterschiedlicher Wellenlängen in das Laserstrahlspeichermittel eingeführt werden, wodurch eine Mehrzahl von Laserstrahlen mit unterschiedlichen Wellenlängen im interaktiven Bereich gesammelt werden.

5. Vorrichtung (11) für optische Wechselwirkungen nach einem der vorhergehenden Ansprüche, worin das in den interaktiven Bereich einzuführende Wechselwirkungsziel ein Partikelstrahl ist, wobei die Wechselwirkung mit dem Laserstrahl die Ausgabe des Laserstrahls wesentlich erhöht oder Auswahl der Wellenlänge des Laserstrahls erfolgt.

6. Vorrichtung (11) für optische Wechselwirkungen nach einem der Ansprüche 1 bis 4, worin das in den interaktiven Bereich einzuführende Wechselwirkungsziel ein Wellenlängenkonvertierungselement ist, wobei durch Wechselwirkung mit dem Laserstrahl Wellenlängenkonversion des Laserstrahls erfolgt.

7. Vorrichtung (11) für optische Wechselwirkungen nach einem der Ansprüche 1 bis 4, worin das in den interaktiven Bereich einzuführende Wechselwirkungsziel ein Partikelstrahl ist, wobei ein Ladungskonvertierungsmagnet (U) angeordnet ist, so dass er den interaktiven Bereich umgibt, um ein Magnetfeld im interaktiven Bereich zu erzeugen, worin der Partikelstrahl im interaktiven Bereich angeregt wird und worin im Magnetfeld ionisiert wird.

8. Vorrichtung (11) für optische Wechselwirkungen nach Anspruch 7, worin der interaktive Bereich in einem Ring eines Ringbeschleunigers (RA) angeordnet ist, wobei ein im interaktiven Bereich angeregter und im Magnetfeld ionisierter Partikel durch den Ringbeschleuniger beschleunigt wird.

9. Vorrichtung (11) für optische Wechselwirkungen nach einem der Ansprüche 1 bis 4, worin das in den interaktiven Bereich einzuführende Wechselwirkungsziel ein lonenstrahl ist, wobei Wechselwirkung mit dem Laserstrahl ein multivalentes Ion erzeugt.

10. Vorrichtung (11) für optische Wechselwirkungen nach einem der Ansprüche 1 bis 4, worin das in den interaktiven Bereich einzuführende Wechselwirkungsziel ein Elektronenstrahl ist, wobei Wechselwirkung mit dem Laserstrahl einen Röntgenstrahl erzeugt.

11. Vorrichtung (11) für optische Wechselwirkungen nach einem der Ansprüche 1 bis 4, worin das in den interaktiven Bereich einzuführende Wechselwirkungsziel Gas ist, wobei Wechselwirkung mit dem Laserstrahl Photolyse bewirkt.

12. Vorrichtung (11) für optische Wechselwirkungen nach einem der vorhergehenden Ansprüche, worin der interaktive Bereich in einer Vakuumkammer (V) ausgebildet ist, wobei ein Kanal (D) zum Einführen von komprimiertem Gas in die Vakuumkammer (V) eine zum interaktiven Bereich gerichtete Mündung aufweist.

13. Vorrichtung (11) für optische Wechselwirkungen nach einem der Ansprüche 1 bis 4, worin das in den interaktiven Bereich einzuführende Wechselwirkungsziel Gas ist, wobei der interaktive Bereich in einer Vakuumkammer (V) ausgebildet ist, wobei ein Kanal (D) in der Vakuumkammer (V) angeordnet ist, der eine zum interaktiven Bereich gerichtete Mündung aufweist, worin komprimiertes Gas in den interaktiven Bereich über den Kanal eingeführt wird, wobei eine lonenkollektorführung in der Vakuumkammer angeordnet ist, um ionisierte Moleküle des Gases zu sammeln, wobei die lonenkollektorführung elektrisch mit einem Flugzeitmassenanalysator zur Analyse der Moleküle verbunden ist.

## Revendications

1. Dispositif d'interaction optique (11) comprenant un premier et un second jeux de miroirs (A, B) disposés suivant un arrangement en face les uns des autres de manière à former une région interactive (10) avec des faisceaux laser se croisant, chaque jeu comprenant une pluralité de miroirs concaves (An, Bn) disposés suivant des arrangements annulaires autour d'un axe commun, un moyen pour générer un faisceau laser pour des réflexions répétées entre lesdits jeux de miroirs (A, B), un moyen de guide de faisceau laser pour introduire ledit faisceau laser dans ladite région interactive et pour délivrer en sortie de celle-ci, après réflexions réciproques prescrites entre lesdits premier et second jeux de miroirs (A, B), un moyen pour introduire une cible d'interaction à l'intérieur de ladite région interactive, ou chaque miroir concave dans ledit premier jeu de miroirs (A) est disposé suivant un arrangement tel qu'un faisceau laser incident est réfléchi vers un miroir concave correspondant dans ledit second jeu de miroirs après un passage à travers une position prescrite sur ledit axe commun, formant de cette manière ladite région interactive d'une forte densité photonique avec intersection des faisceaux réfléchis au niveau de ladite position prescrite sur ledit axe commun, et où chaque miroir concave dans ledit second jeu de miroirs (B) est disposé suivant un arrangement tel qu'un faisceau incident provenant d'un miroir concave dans ledit premier jeu de miroirs est réfléchi vers un miroir concave adjacent au dit miroir concave dans ledit premier jeu de miroirs, décalant séquentiellement de cette manière les faisceaux réfléchis dans une direction circonférentielle desdits jeux de miroirs.

2. Dispositif d'interaction optique (11) tel que revendiqué dans la revendication 1, dans lequel chaque miroir concave dans ledit premier jeu de miroirs (A) est disposé suivant un arrangement tel qu'un faisceau laser incident est réfléchi de manière à se focaliser sur ladite position prescrite sur ledit axe commun et pour diriger celui-ci vers un miroir concave correspondant dans ledit second jeu de miroirs, en formant de cette manière une région interactive de forte densité photonique avec une accumulation de focalisations sur ladite position prescrite sur ledit axe commun.

3. Dispositif d'interaction optique (11) tel que revendiqué dans les revendications 1 ou 2, dans lequel un faisceau laser est réfléchi dans un mode parallèle par un miroir concave dans ledit premier jeu de miroirs (A) et un faisceau laser est réfléchi dans un mode convergent par un miroir concave dans ledit second jeu de miroirs (B), de manière à se focaliser sur son trajet.

4. Dispositif d'interaction optique (11) tel que revendiqué dans les revendications 1, 2 ou 3, dans lequel au moins deux moyens de stockage de faisceau laser comprenant ledit premier jeu de miroirs, ledit second jeu de miroirs, ledit moyen de génération de faisceau laser et ledit moyen de guide de faisceau laser sont arrangés pour avoir ladite région interactive à une position commune, des faisceaux laser de différentes longueurs d'onde étant introduits dans ledit moyen de stockage de faisceau laser, collectant par ce moyen une pluralité de faisceaux laser de différentes longueurs d'onde au niveau de ladite région interactive.

5. Dispositif d'interaction optique (11) tel que revendiqué dans l'une quelconque des revendications précédentes, dans lequel ladite cible d'interaction à introduire à l'intérieur de ladite région interactive est un faisceau de particules; l'interaction avec ledit faisceau laser augmentant substantiellement la sortie dudit faisceau laser ou effectuant une sélection de la longueur d'onde dudit faisceau laser.

6. Dispositif d'intéraction optique (11) tel que revendiqué dans l'une quelconque des revendications 1 à 4, dans lequel ladite cible d'interaction à introduire à l'intérieur de ladite région interactive est un élément de conversion de longueur d'onde, l'interaction avec ledit faisceau laser procédant à une conversion de longueur d'onde dudit faisceau laser.

7. Dispositif d'interaction optique (11) tel que revendiqué dans l'une quelconque dés revendications 1 à 4, dans lequel ladite cible d'interaction à introduire à l'intérieur de ladite région interactive est un faisceau de particules, un aimant de conversion de charge (U) étant disposé de manière à entourer ladite région interactive pour générer un champ magnétique dans ladite région interactive, où ledit faisceau de particules est excité dans ladite région interactive et où il est ionisé dans ledit champ magnétique.

8. Dispositif d'interaction optique (11) tel que revendiqué dans la revendication 7, dans lequel ladite région intéractive est disposée à l'intérieur d'un anneau d'un accélérateur en anneau (RA), une particule excitée dans ladite région intéractive et ionisée dans ledit champ magnétique étant accélérée par ledit accélérateur en anneau.

9. Dispositif d'interaction optique (11) tel que revendiqué dans l'une quelconque des revendications 1 à 4, dans lequel ladite cible d'interaction à introduire à l'intérieur de ladite région interactive est un faisceau d'ions, l'interaction avec ledit faisceau laser générant un ion multivalent.

10. Dispositif d'interaction optique (11) tel que revendiqué dans l'une quelconque des revendications 1 à 4, dans lequel ladite cible d'interaction à introduire à l'intérieur de ladite région interactive est un faisceau d'électrons, l'interaction avec ledit faisceau laser générant un faisceau de rayons X.

11. Dispositif d'interaction optique (11) tel que revendiqué dans l'une quelconque des revendications 1 à 4, dans lequel ladite cible d'interaction à introduire à l'intérieur de ladite région interactive est un gaz, l'interaction avec ledit faisceau laser provoquant une photolyse.

12. Dispositif d'interaction optique (11) tel que revendiqué dans l'une quelconque des revendications précédentes, dans lequel ladite région d'interaction est formée à l'intérieur d'une chambre à vide (V), une conduite (D) pour introduire le gaz compresse à l'intérieur de ladite chambre à vide (V) ayant une ouverture dirigée vers ladite région interactive.

13. Dispositif d'interaction optique (11) tel que revendiqué dans l'une quelconque des revendications 1 à 4, dans lequel ladite cible d'interaction à introduire à l'intérieur de ladite région interactive est un gaz, ladite région interactive étant formée à l'intérieur d'une chambre à vide (V), une conduite (D) étant disposée à l'intérieur de ladite chambre à vide (V) et ayant une ouverture dirigée vers ladite région interactive, où un gaz compressé est introduit à l'intérieur de ladite région interactive via ladite conduite, un guide collecteur d'ions étant disposé dans ladite chambre à vide de manière à collecter les molécules ionisées dudit gaz, ledit guide collecteur d'ions étant électriquement connecté à un analyseur de masse par les temps de parcours afin d'analyser lesdites molécules.
